# EUROPEAN PATENT APPLICATION

(11) **EP 4 730 153 A1**
(43) Date of publication of application: **22.04.2026**
(21) Application number: 25207542.9
(22) Date of filing: 08.10.2025
(51) Int. Cl.: G06F 16/3331, G06F 16/36

(54) **HANDLING DATA REQUESTS DIRECTED TO A CORPUS DATABASE**

(30) Priority: 17.10.2024 DE 102024130258
(71) Applicant: Bundesdruckerei GmbH, 10969 Berlin (DE)
(72) Inventor: Abedi, Ali, 12059 Berlin (DE); Yeghaneh Abkenar, Mohammad, 10709 Berlin (DE); Simon, Lars, 10117 Berlin (DE); Radons, Manuel, 15712 Königs Wusterhausen (DE); Kowalski, Hagen-Henrik, 12307 Berlin (DE); Eble, Holger, 10965 Berlin (DE)
(74) Representative: Richardt Patentanwälte PartG mbB

(57) **Abstract**

Disclosed is a method for a corpus database comprising an initial set of texts. The initial set and a received update may be preprocessed for obtaining update text chunks of the update and closest initial text chunks of the initial set. A set of one or more dimensions representing the update may be determined. For each dimension a metric set may be determined. For each dimension and for each metric associated with the dimension, a set of one or more of the analysis tasks whose results can be used to evaluate the metric may be selected and at least one prompt may be generated from of the update and the closest initial text chunks. The prompt may be input to a LM for receiving results. The results may be used to evaluate the metric sets. The evaluated metric sets may be used to update or not update the corpus database.

## Description

### FIELD OF THE INVENTION

The present disclosure is directed generally to the field of computing systems and particularly to a method for handling data requests directed to a corpus database.

### BACKGROUND

The advent of digital technology has led to an exponential growth in the amount of data generated and stored. This data, often in the form of text, is derived from various sources such as books, articles, websites, and social media platforms. Managing and processing this vast amount of textual data has become a significant challenge for many industries, including but not limited to, information retrieval, natural language processing, machine learning, and artificial intelligence.

### SUMMARY

Example embodiments provide a method for handling data requests directed to a corpus database, the corpus database comprising an initial set of texts obtained from one or more sources, the initial set of texts representing a specific ontology, the method comprising: preprocessing the initial set of texts and a received update, the update comprising a new text and/or an update of an initial text, the update belonging to the specific ontology, the preprocessing resulting in update text chunks of the update and closest initial text chunks of the initial set of texts; determining a set of one or more dimensions representing the update, each dimension providing a feature categorizing a content of the update; for each dimension of the set of dimensions determining a metric set, each metric set comprising one or more metrics for evaluation of the respective dimension; providing a language model, LM, that can perform multiple analysis tasks, the analysis tasks being defined based on the metric sets; for each dimension of the set of dimensions performing operations of: for each metric of the metric set associated with the dimension, performing operations of: selecting a set of one or more of the analysis tasks whose results can be used to evaluate the metric; and generating at least one prompt from of the update text chunks and the closest initial text chunks in accordance with the selected set of tasks; inputting the at least one prompt to the LM for receiving results of the selected analysis tasks; using the results obtained for the set of dimensions to evaluate the metric sets; using the evaluated metric sets for comparing the update with the closest initial text chunks; providing a control signal to a control unit, the control signal being indicative of commands to update the corpus database based on the comparison result; updating by the control unit the corpus database using the control signal.

Example embodiments provide a computer system being configured for performing the method.

Example embodiments provide a computer program product comprising instructions for causing a computer system for performing the method.

### BRIEF DESCRIPTION OF THE DRAWINGS

In the following, examples are described in greater detail making reference to the drawings in which:
Fig. 1 is a flowchart of a method for executing a trained classical neural network in accordance with an example of the present subject matter.
Fig. 2 is a diagram of a computer system in accordance with an example of the present subject matter.
Fig. 3 is a block diagram of an exemplary computer system for implementing at least part of the present method in accordance with an example of the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

Unlike non-text databases, where data integrity constraints such as foreign keys and unique constraints are more readily enforced through attribute values, facilitating easier consistency management, corpus databases face significant challenges in maintaining consistency and integrity. These challenges stem from the need for contextual tracking of changes and managing conflicts in text updates. Furthermore, while non-text databases benefit from well-defined relationships and dependencies among records, structured through clear database schemas like relational tables with primary and foreign keys, text data in corpus databases often involves complex interdependencies that are not explicitly defined by such schemas. Hence updating a text database has its own technical challenges mainly due to complex interrelation in the content of the text database. This is especially challenging because the impact on users of these databases can be significant. The present subject matter may solve this issue.

The corpus database may store any type of information. The present subject matter may provide a database management system that involves processing and management of updates of the stored information.

The initial set of texts may be received by the computer system (e.g., over a network connection) from the one or more sources. The preprocessing of the initial set of texts and the received update to obtain the update text chunks and the closest initial text chunks may be performed using a preprocessing method. The update may comprise a new text and/or an update of at least one initial text of the set of initial texts. The update of an initial text may either be the initial text supplemented with the update or simply the update itself. The preprocessing method comprises segmenting the initial set of texts into initial text chunks. The preprocessing method also involves using a natural language processing (NLP) learning model to represent the initial text chunks in a latent space by an embedding vector per initial text chunk. This process results in initial embedding vectors. The initial embedding vectors may capture semantic meanings and syntactic relationships within the initial set of texts. The NLP learning model may, for example, be a trained transformer model such as Bidirectional Encoder Representations from Transformers (BERT) or any other trained model that can encode text into the embedding vectors. The preprocessing method further comprises storing the initial embedding vectors in an embedding database. The preprocessing method also involves segmenting the update into update text chunks. The preprocessing method further comprises using the NLP learning model to represent the update text chunks in the latent space by an embedding vector per update text chunk. This process results in update embedding vectors. The preprocessing method also includes performing a similarity search in the embedding database between the update embedding vectors and the initial embedding vectors. This process results in closest initial embedding vectors of the initial embedding vectors. The preprocessing method further comprises retrieving initial text chunks, referred to as the closest initial text chunks, that are represented by the closest initial embedding vectors. The update text chunks and the closest initial text chunks may be referred to respectively as preprocessing output text chunks. For example, if the number of update text chunks is m and the number of closest initial text chunks is n, the number of the preprocessing output text chunks is n + m, which is the total number of update text chunks and the closest initial text chunks.

The preprocessing method might employ, as described above, embeddings to determine the update text chunks and the closest initial text chunks. However, this is not exclusive, as alternative approaches like semantic matching may also be utilized to determine the closest initial text chunks that are associated with the update text chunks. Als, text segmentation into text chunks may be executed using different methods such as rule-based chunking or machine learning-based chunking. For instance, rule-based chunking might involve using regular expressions on parts of speech tags. Conversely, machine learning-based chunking might utilize a trained model designed to analyze a text and output segmented chunks.

The corpus database may be a database. The corpus database may refer to a collection of data stored in text format. The corpus database may contain various types of textual data such as articles. For example, the corpus database may be a text database.

The text may be a basic unit of information or a record. The text may comprise a single document, data entry, or any other segment of text identified and stored as an individual entry. The text may have a specific content, size, and format.

The ontology may, for example, be a structured framework for organizing information. It may involve the categorization of entities within a specific domain and the relationships between those entities. The ontology may be used to model knowledge about the specific domain. The fact that the update as well as the initial set of texts belong to the same ontology may refer to the idea that both may share a common set of concepts, relationships, and entities that are defined and structured according to the same ontology.

Segmenting the text may comprise dividing the text into syntactically correlated parts of words, such as phrases, clauses, or sentence fragments, wherein the text chunks may be respectively said parts of words. The segmentation may provide manageable pieces, facilitating easier parsing. By segmenting text into chunks, it may aid significantly in the extraction of key information, essential for processing the content of the text. The segmentation of the initial set of texts may comprise the segmentation of each text of the initial set of texts. The segmentation of the initial set of texts may result in text chunks which are referred to as the initial text chunks. The initial text chunks may be stored in a storage of the computer system. The NLP learning model is used to represent each text chunk of the initial set of text chunks into an embedding vector in the latent space, which is referred to as initial embedding vector. This may result in the initial embedding vectors. The embedding vector may be a numerical representation of the text chunk in the latent space, where similar text chunks have closer distances to each other than dissimilar ones. The embedding vector may be a vector. The embedding vector may, for example, be a vector of floating-point numbers. The size of the embedding vector may be the number of dimensions of the latent space. The latent space may be a vector space. The latent space may provide a mathematical representation of texts that captures their semantic meaning. The initial embedding vectors may be stored in the embedding database. The embedding database may be a database. The embedding database may, for example, be a vector database.

The received update may comprise one or more texts. The segmentation of the update results in the update text chunks. The NLP learning model may be used to represent each update text chunk of the update text chunks by an update embedding vector in the latent space. With the similarity search, each update embedding vector may be used as a query to the embedding database for finding zero or more initial embedding vectors that are similar to the each update embedding vector. The similarity search may thus result in initial embedding vectors which are closest (most similar) to the updated embedding vectors, and which may be referred to as the closest initial embedding vectors. Each embedding vector of the closest initial embedding vectors represents a respective text chunk of the initial set of chunks, which is referred to as closest initial text chunk. These closest initial text chunks may, for example, be retrieved from the storage where the initial text chunks are stored.

The set of one or more dimensions represent the update, wherein each dimension of the set of dimensions is associated with a respective metric set. The metric set comprises one or more metrics. The set of dimensions may be user defined dimensions, wherein, for example, a user may be prompted to provide the set of dimensions for the received update. Alternatively, the set of dimensions may automatically be determined e.g., using a machine learning model that has been trained to predict relevant dimensions for a given input text. The metric sets may, for example, be obtained using a predefined mapping between the dimensions and metric sets.

The term "dimension" refers to a particular characteristic or aspect that helps to categorize or understand the content. It can include factors such as the text's purpose, tone, complexity, thematic elements, and the nature of its subject matter. Each of these dimensions offers a way to analyze and interpret the text, providing insights into its intentions, style, and the audience it is addressing. For instance, a technical document may have a high complexity dimension, while another type of documents may have a strong persuasive dimension. The dimension may be a perspective or attribute of data that may be used for analysis, representing qualitative values, while a metric is a quantifiable measure used to evaluate performance or progress in numerical terms. For example, dimensions may categorize or segment data (like region, time, product type), providing context for analysis, whereas metrics may be specific, measurable indicators (like revenue, quantity sold, website visits) used to assess the performance within those dimensions.

The following specific examples are provided to illustrate the present subject matter but is not limited to. For example, the dimension may be a lexical dimension which may represent the level of precision of used terminology. The metric set for this dimension may comprise Type-Token Ratio (TTR) which is the ratio of unique words to the total number of words in the text and average word length. For the metric TTR, the set of selected analysis tasks whose results may be used to evaluate the metric TTR may, for example, comprise text summarization, text translation, and text paraphrasing. The dimension may, in another example, comprise a semantic dimension which deals with meaning-what the words represent and how they relate to each other within the context of the text. For the semantic dimension, the metric set may comprise an entity resolution accuracy which defines the accuracy of identification of semantically related entities in a text. For this accuracy metric, the set of selected analysis tasks whose results may be used to evaluate this accuracy metric, for example, comprise entity recognition.

The resulting metric sets and the preprocessing output text chunks may be used to decide whether to update the corpus database with the received update or not update it with the received update.

For each metric of the metric sets, a prompt generation method may be performed. The prompt generation method may comprise the operation of selecting the set of one or more of the analysis tasks whose results can be used to evaluate the metric, and the operation of generating at least one prompt from the preprocessing output text chunks in accordance with the selected set of tasks. In one example, the prompt generation method may be performed per distinct metric of the metric sets. This may prevent duplicating the execution of the prompt generation method on the same metric that belongs to different metric sets. This may save processing resources. Alternatively, the prompt generation method may be performed for each metric of the metric sets. This may enable a simplified implementation of the present method without complex conditional branching. The execution of the prompt generation method on each metric (or each distinct metric) of the metric sets may result in a set of one or more generated prompts. Each generated prompt of the set of generated prompts may be associated with a metric of the metric sets. The prompt refers to an input text or query provided to the LM, which it uses as a basis to generate a response or output. The set of generated prompts may be input to the LM for receiving results from the LM. The result of each generated prompt may be the result of the analysis task(s) that have been selected for the metric associated with the generated prompt and for which the prompt was generated. The following specific example is provided to illustrate the operation of prompt generation but is not limited to. For example, if for a given metric M1, two analysis tasks task1 and task2 have been selected, one prompt in1 may be generated in accordance with the two tasks, or two prompts in1_1 and in1_2 may be generated in accordance with task1 and taks2 respectively. This means that in the first option the prompt in1 was generated for the two tasks task1 and taks2, while in the second option prompt in1_1 was generated for task task1 and prompt in1_2 was generated for task taks2. In the first option, the at least one prompt generated for M1 is one prompt in1, and the LM result obtained for prompt in1 may be the result of the analysis tasks task1 and task2 that have been selected for the metric M1 associated with the generated prompt in1 and for which the prompt in1 was generated. In the second option, the at least one prompt generated for M1 is two prompts in1_1 and in1_2, and the LM results for prompt in1_1 may be the result of the analysis task task1 that has been selected for the metric M1 associated with the generated prompt in1_1 and for which the prompt in1_1 was generated, while the LM results for prompt in1_2 may be the result of the analysis task task2 that has been selected for the metric M1 associated with the generated prompt in1_2 and for which the prompt in1_2 was generated.

The results obtained for the metric sets may be used to evaluate the metrics of the metric sets. For example, for each metric, the result(s) obtained for the selected analysis tasks of the metric may be used to evaluate the metric. The evaluated metrics may be used for comparing the received update with the closest initial text chunks. The control signal may be indicative of commands to update the corpus database based on the comparison result. The control unit may update the corpus database using the control signal. The commands may for example comprise one or more instructions to apply the update in the corpus database if the comparison result fulfills a criterion and to not apply the update if the criterion is not fulfilled. In another example, the commands may further comprise one or more instructions to control by the control unit a system whose operation may use the update as input. The corpus database may thus play a significant role in enhancing the functionality and intelligence of systems across various applications.

The present subject matter may provide alternative implementations of the operation of the generation of prompts for each metric, depending on the specific requirements and constraints, including factors like context sensitivity, resource availability, and the need for parallel processing.

According to one first prompt generation example, the generating of the at least one prompt for the current metric comprises: for each task of the selected set of tasks of the metric and for each text chunk of the preprocessing output text chunks: generating a prompt for the text chunk. For example, if the number of preprocessing output text chunks is X (X = n + m) and the number of selected set of tasks is Y, the number of prompts generated by this example may be the product of X and Y, X*Y. The product X*Y may represent the number of distinct pairs of (analysis task, text chunk). Each distinct pair may be referred to as entity.

Using individual prompts for each distinct entity may offer several advantages, including precision and clarity with focused responses that ensure each entity is tailored specifically without the confusion that might occur with multiple chunks in one prompt. This approach may also isolate errors to specific interactions, making them easier to identify and correct without affecting other entities. Parallel processing may be another benefit, as individual prompts may be processed concurrently, potentially speeding up response times when multiple systems or threads are available. The simplicity in implementation may come from managing single entities in separate prompts, which may simplify the design of the system by keeping each prompt-response cycle straightforward and self-contained. Furthermore, this example may allow for adaptability in response handling; each entity may be handled independently, permitting more dynamic and flexible strategies, such as adjusting the computational effort or response strategy based on the complexity or nature of each entity.

According to one second prompt generation example, the generating of the at least one prompt for the current metric comprises: generating one prompt representing the preprocessing output text chunks. Following the above example, this example may provide one prompt for the entire set of selected analysis tasks of the metric or provide a number Y of prompts one per analysis task of the metric.

According to one third prompt generation example, the generating of the at least one prompt for the current metric comprises: generating one prompt representing the update text chunks and another prompt representing the closest initial text chunks. That is, two prompts are generated for the preprocessing output text chunks. Following the above example, this example may provide two prompts for the entire set of selected analysis tasks of the metric or provide a number 2*Y of prompts.

According to one fourth prompt generation example, the generating of the at least one prompt for the current metric comprises: generating one prompt representing the update text chunks and enhancing the prompt with a context field defined from the closest initial text chunks. Following the above example, this example may provide one prompt for the entire set of selected analysis tasks of the metric or provide a number Y of prompts one per analysis task of the metric.

The second, third and fourth prompt generation examples may be advantageous for the following reasons. Using a single prompt for multiple entities may offer significant benefits such as efficiency in interaction, where the reduced overhead of managing separate interactions can be particularly advantageous. Batch processing may be another area where this approach may prove efficiency, allowing for the handling of multiple entities simultaneously which may be ideal for scenarios where responses are collected and processed in bulk. Additionally, a single prompt may help maintain contextual awareness across multiple entities, potentially yielding more coherent and contextually informed responses, especially if the entities are related or build upon each other. From a cost-effectiveness standpoint, single prompts may optimize resource use and can significantly cut costs in systems where computational resources or application programming interface (API) calls are limited or expensive.

According to one example, the prompt generation performed in the second, third and fourth prompt generation examples is performed per task of the selected set of tasks of the metric or for the entire selected set of tasks of the metric.

Providing different prompt generation examples may enable a flexible implementation of the evaluation of each metric of the metric sets.

For example, the first prompt generation example may enable to evaluate the metric per text chunk of the preprocessing output text chunks. Following the above example, this may result in a number X of evaluations of the metric. These X evaluations may be used to compare each update text chunk with each closest initial text chunk. This may result in individual comparison results. The individual comparison results may, for example, be combined (e.g., averaged) to obtain a global comparison result. The global comparison result may indicate the difference between the update text chunks and the closest initial text chunks. For example, if the difference exceeds a threshold, the corpus database may not be updated with the received update; otherwise, it may be updated with the received update. The threshold may be provided by the criterion.

For example, if the metric is TTR as described above, the TTR may be evaluated per text chunk of the preprocessing output text chunks. The TTR of each update text chunk may compared against the TTR of each closest initial text chunk. The comparison between two TTRs may, for example, be performed by computing the difference or ration of the two TTRs. This may result in the individual comparison results.

The second and fourth prompt generation example may enable to evaluate the metric once for the preprocessing output text chunks. This single evaluation of the metric may be indicative of the difference between the update text chunks and the closest initial text chunks. For example, if the difference exceeds a threshold, the corpus database may not be updated with the received update; otherwise, it may be updated with the received update. The threshold may be provided by the criterion. For example, if the metric is a similarity metric, it may be evaluated using the entire preprocessing output text chunks to indicate the difference between the update text chunks and the closest initial text chunks.

The third prompt generation example may enable to evaluate the metric for the update text chunks and for the closest initial text chunks. This may result in two evaluations of the metric for the preprocessing output text chunks. These two evaluations may be compared. The comparison result may indicate the difference between the update text chunks and the closest initial text chunks. For example, if the difference exceeds a threshold, the corpus database may not be updated with the received update; otherwise, it may be updated with the received update. The threshold may be provided by the criterion.

For example, if the metric is TTR as described above, the TTR may be evaluated once for all the update text chunks (e.g., to obtain TTR1). In addition, the TTR may be evaluated once for all the closest initial text chunks (e.g., to obtain TTR2). The comparison between TTR1 and TTR2 may, for example, be performed by computing the difference or ration of TTR1 and TTR2. The computation result may be compared against the threshold to decide whether to update the corpus database.

Hence, for each metric, a set of one or more evaluations may be performed, wherein the set of one or more the evaluations may indicate (e.g., by performing comparisons) whether or not to update the corpus database with the received update. That is, each metric may be associated with a decision to update or not update the corpus database with the received update. The decisions of all metrics of the metric sets may be combined to decide whether or not to update the corpus database with the received update. For example, if a minimum fraction (e.g., 50%) of the metrics are associated with decisions to update the corpus database, it may be updated; otherwise; it may not be updated.

According to one example, the inputting of the at least one prompt comprises: for each metric inputting simultaneously to the LM the at least one prompt which are generated for the metric. Following the first prompt generation example, the X*Y prompts may be input simultaneously to the LM.

Inputting simultaneously the prompts of different tasks to the LM that performs multiple tasks may have several advantages. It may enhance contextual coherence and integration, allowing the LM to leverage the context from one task to enhance understanding and performance on another, ensuring nuanced responses and consistent outputs across tasks. This approach may also improve efficiency by reducing processing time through batch processing and minimizing the need for repeated context setting, thus optimizing the use of hardware and software resources. Additionally, it may reduce computational overhead and energy consumption, contributing to more sustainable computing practices. Moreover, this may enhance user experience by simplifying interactions and reducing cognitive load, while also enabling the LM to learn and generalize across varied tasks, improving its adaptability and flexibility.

According to one example, the inputting of the at least one prompt comprises: for each metric set inputting simultaneously to the LM the at least one prompt which are generated for the metric set.

According to one example, the inputting of the at least one prompt comprises: inputting simultaneously to the LM the at least one prompt which are generated for the entire set of dimensions.

According to one example, the inputting of the at least one prompt comprises: sequentially inputting each prompt of the at least one prompt.

Inputting prompts sequentially to the LM may have several benefits, particularly in enhancing focus and precision. This method may allow the LM to concentrate fully on each prompt individually, improving accuracy and tailoring responses specifically to each prompt's requirements. Sequential processing may aid in error isolation, making troubleshooting simpler since issues can be directly associated with a specific task at hand without the interference of other tasks. It may also facilitate controlled management of computational resources, particularly useful in systems with limited processing capacity or tasks with varying computational demands.

According to one example, the inputting the at least one prompt to the LM for receiving results of the selected analysis tasks comprises: connecting to a remote system where the LM is deployed; sending the at least one prompt to the remote system, thereby triggering the inputting of the at least one prompt to the LM and receiving results of the selected analysis tasks from the remote system.

Utilizing a remote LM may provide numerous advantages such as scalability, accessibility, and cost-effectiveness. Remote LM may allow users to access substantial computational power and advanced artificial intelligence (AI) capabilities from anywhere, alleviating the need for costly local infrastructure and maintenance. This setup may especially be beneficial for organizations with fluctuating computational needs or distributed teams, as it may offer the flexibility to scale resources as needed. Additionally, service providers may ensure that the LM is continuously updated with the latest advancements, thereby eliminating the need for users to manage updates and technology upkeep themselves. The ease of integration via APIs may allow seamless deployment into existing systems, enhancing product features and service delivery without diverting focus from core business competencies.

According to one example, the method further comprises annotating each text chunk of the update text chunks and the closest initial text chunks, wherein the generating of the at least one prompt is performed using the annotated text chunks.

Generating prompts from annotated texts may significantly enhance the performance and precision of the LM. Annotations may provide detailed insights and context, which may refine the accuracy and relevance of the LM's responses. Additionally, annotated text may support complex tasks such as sentiment analysis and named entity recognition by guiding the LM to interpret deeper layers of meaning and reducing ambiguities, thereby lowering the error rate in outputs.

According to one example, the comparing of the update with the closest initial text chunks comprises: identifying redundancies or inconstancies between the update and the closest initial text chunks. For example, if there is a redundancy or inconstancy, the update may not be implemented in the corpus database; otherwise, it may be implemented.

According to one example, the method further comprises performing the update of the corpus database with the update if the comparison results indicate a match between the update and the closest initial text chunks.

For example, the match between the update and the closest initial text chunks may be a sematic match. For example, the two may use completely different vocabulary and still be considered a match if they serve the same purpose or lead to the same conclusions within a given context. The matching texts may express the same ideas, facts, or intentions.

According to one example, the selecting of the set of analysis tasks comprises: prompting the LM with the metric in order to provide analysis tasks that can be used to evaluate the metric, wherein the selected analysis tasks are the analysis tasks provided by the LM in response to the prompting.

This example may effectively utilize the LM to help decide which task to perform based on the metric. This may maximize the inherent capabilities of the LM by leveraging its built-in functionalities without the need for external systems or complex integrations. It may offer a highly flexible and adaptable approach that easily adjusts to various types of queries and tasks, requiring minimal specific programming for each task type. Additionally, this example may enhance efficiency, particularly in real-time environments, as it may enable quick parsing of the user's intent and rapid selection of the appropriate task, streamlining the decision-making process effectively.

According to one example, the segmenting of the initial set of texts, the using of the NLP for representing the initial set of texts and the storing of the initial embedding vectors is performed in response to the receiving of the update.

Performing these steps only upon receiving the update, rather than preemptively, may offer numerous advantages such as resource efficiency, improved system performance, and reduced operational costs. This approach may ensure that computational resources are utilized only when necessary, leading to energy conservation and optimized use of system capabilities, which may be particularly beneficial in environments with limited resources. Additionally, it may guarantee the use of real-time data, enhancing the accuracy and relevance. Furthermore, the scalability and flexibility of systems may be enhanced as they can adjust to variable workloads more efficiently without maintaining constant high readiness. This on-demand approach may simplify system management and maintenance, reducing the complexity and cost associated with continuous monitoring and adjustments, thus improving overall operational efficiency and user satisfaction.

According to one example, the analysis tasks comprise: summarization, entity recognition, sentiment analysis, discourse analysis, and similarity analysis.

According to one example, the LM comprises one individual LM per subset of related analysis tasks of the analysis tasks. Related analysis tasks may be tasks that are connected in terms of their objectives, methodologies, or data. For example, related analysis tasks may involve tasks that share common analytical goals or that support one another in achieving a comprehensive understanding or solution to a problem.

Structuring a LM that is capable of handling multiple tasks, to comprise individual LMs for each task or for subsets of tasks may have advantages such as specialization, efficient resource management, error isolation and update simplification. Specialization may enable each individual LM to be meticulously fine-tuned for distinct tasks, enhancing output quality and accuracy. Efficient resource management may guarantee that dedicated resources are utilized optimally, ensuring they do not interfere with other tasks and thus improving scalability and isolation. Error isolation may safeguard the system from widespread issues by confining problems to individual models, which accelerates troubleshooting. Updates and maintenance may be simplified as each individual LM can be independently updated to meet its specific needs, promoting ongoing enhancement with minimal disruption.

The LM may, for example, be a large language model (LLM).

The LM may be trained to perform the analysis tasks, wherein the analysis tasks may be tasks that can be used to evaluate all metrics of the metric sets. The analysis tasks of the LM may, for example, be user defined. And the LM may be trained to perform the analysis tasks in response to their determination.

The present subject matter may comprise the following clauses.

Clause 1. A method for handling data requests directed to a corpus database, the corpus database comprising an initial set of texts obtained from one or more sources, the initial set of texts representing a specific ontology, the method comprising: preprocessing the initial set of texts and a received update, the update comprising a new text and/or an update of an initial text, the update belonging to the specific ontology, the preprocessing resulting in update text chunks of the update and closest initial text chunks of the initial set of texts; determining a set of one or more dimensions representing the update, each dimension providing a feature categorizing a content of the update; for each dimension of the set of dimensions determining a metric set, each metric set comprising one or more metrics for evaluation of the respective dimension; providing a language model, LM, that can perform multiple analysis tasks, the analysis tasks being defined based on the metric sets; for each dimension of the set of dimensions performing operations of: for each metric of the metric set associated with the dimension, performing operations of: selecting a set of one or more of the analysis tasks whose results can be used to evaluate the metric; generating at least one prompt from the update text chunks and the closest initial text chunks in accordance with the selected set of tasks; inputting the at least one prompt to the LM for receiving results of the selected analysis tasks; using the results obtained for the set of dimensions to evaluate the metric sets; using the evaluated metric sets for comparing the update with the closest initial text chunks; providing a control signal to a control unit, the control signal being indicative of commands to update the corpus database based on the comparison result; updating by the control unit the corpus database using the control signal.

Clause 2. The method of clause 1, wherein the preprocessing comprises: segmenting the initial set of texts into initial text chunks; using a natural language processing, NLP, learning model to represent the initial text chunks in a latent space by an embedding vector per initial text chunk, resulting in initial embedding vectors; storing the initial embeddings vectors in an embedding database; segmenting the update into the update text chunks; using the NLP learning model to represent the update text chunks in the latent space by an embedding vector per update text chunk, resulting in update embedding vectors; performing a similarity search in the embedding database between the update embedding vectors and the initial embedding vectors, resulting in closest initial embedding vectors of the initial embedding vectors; retrieving initial text chunks, referred to as the closest initial text chunks, that are represented by the closest initial embedding vectors.

Clause 3. The method of clause 1 or 2, wherein the generating of the prompts comprises: for each task of the selected set of tasks and for each text chunk of the update text chunks and the closest initial text chunks: generating a prompt for the text chunk.

Clause 4. The method of clause 1 or 2, wherein the generating of the at least one prompt comprises: generating one prompt representing the update text chunks and the closest initial text chunks; or generating one prompt representing the update text chunks and another prompt representing the closest initial text chunks; or generating one prompt representing the update text chunks and enhancing the prompt with a context field defined from the closest initial text chunks.

Clause 5. The method of clause 4, wherein the generating is performed per task of the selected set of tasks or for the entire selected set of tasks.

Clause 6. The method of any of the preceding clauses, the inputting of the at least one prompt comprising: for each metric inputting simultaneously to the LM the at least one prompt which are generated for the metric.

Clause 7. The method of any of the preceding clauses 1 to 5, the inputting of the at least one prompt comprising: for each metric set inputting simultaneously to the LM the at least one prompt which are generated for the metric set.

Clause 8. The method of any of the preceding clauses 1 to 5, the inputting of the at least one prompt comprising: inputting simultaneously to the LM the at least one prompt which are generated for the entire set of dimensions.

Clause 9. The method of any of the preceding clauses 1 to 5, the inputting of the at least one prompt comprising: sequentially inputting each prompt of the at least one prompt.

Clause 10. The method of any of the preceding clauses, wherein the inputting the at least one prompt to the LM for receiving results of the selected analysis tasks comprises: connecting to a remote system where the LM is deployed; sending the at least one prompt to the remote system, thereby triggering the inputting of the at least one prompt to the LM; and receiving results of the selected analysis tasks from the remote system.

Clause 11. The method of any of the preceding clauses, further comprising annotating each text chunk of the update text chunks and the closest initial text chunks, wherein the generating of the at least one prompt is performed using the annotated text chunks.

Clause 12. The method of any of the preceding clauses, wherein the comparing comprises: identifying redundancies or inconstancies between the update and the closest initial text chunks.

Clause 13. The method of any of the preceding clauses, comprising performing the update of the corpus database with the update if the comparison results indicate a match between the update and the closest initial text chunks.

Clause 14. The method of any of the preceding clauses, wherein the selecting of the set of analysis tasks comprises: prompting the LM with the metric in order to provide analysis tasks that can be used to evaluate the metric, wherein the selected analysis tasks are the analysis tasks provided by the LM in response to the prompting.

Clause 15. The method of any of the preceding clauses, wherein the segmenting of the initial set of texts, the using of the NLP for representing the initial set of texts and the storing of the initial embedding vectors is performed in response to the receiving of the update.

Clause 16. The method of any of the preceding clauses, the analysis tasks comprising: summarization, entity recognition, sentiment analysis, discourse analysis, and similarity analysis.

Clause 17. The method of any of the preceding clauses, the LM comprising one individual LM per subset of related analysis tasks of the analysis tasks.

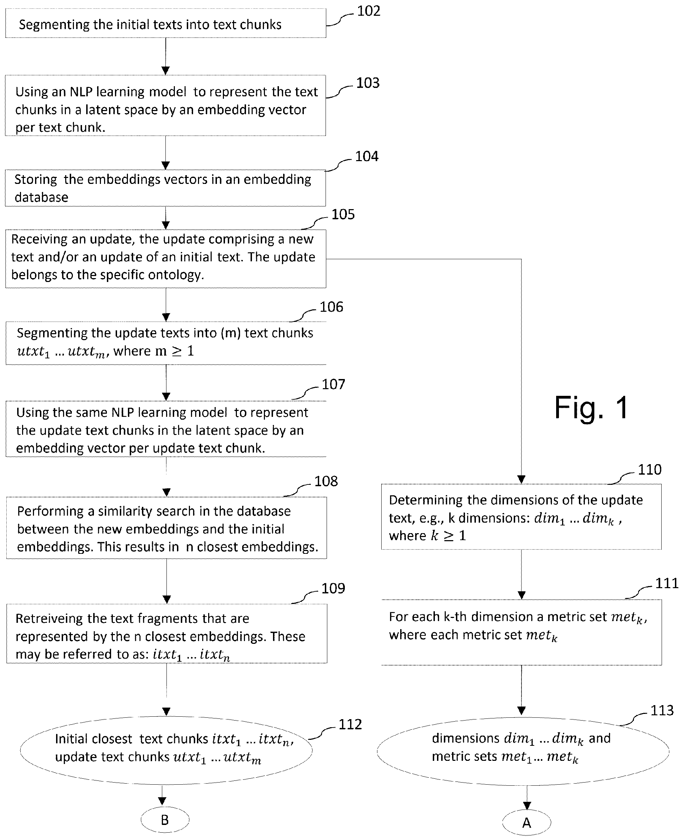

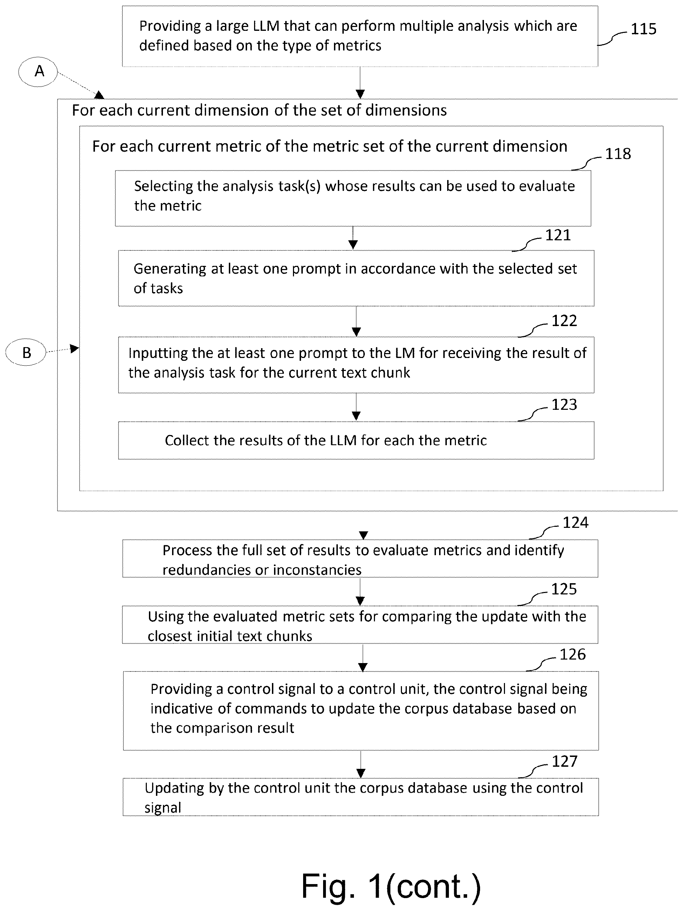

**Fig. 1** is a flowchart of a method for handling data requests directed to a corpus database. The corpus database comprises an initial set of texts obtained from one or more sources. The initial set of texts represents a specific ontology.

The initial set of texts may be segmented in step 102 into initial text chunks. A natural language processing (NLP) learning model may be used in step 103 to represent the initial text chunks in a latent space by an embedding vector per initial text chunk. This process results in initial embedding vectors.

The initial embedding vectors may be stored in step 104 in an embedding database. An update may be received in step 105. The update comprises a new text and/or an update of an initial text of the corpus database. The update belongs to the specific ontology.

The update may be segmented in step 106 into update text chunks.

The NLP learning model may be used in step 107 to represent the update text chunks in the latent space by an embedding vector per update text chunk. This process results in update embedding vectors.

A similarity search may be performed in step 108 in the embedding database between the update embedding vectors and the initial embedding vectors. This process results in closest initial embedding vectors of the initial embedding vectors.

Initial text chunks, referred to as closest initial text chunks, that are represented by the closest initial embedding vectors may be retrieved or obtained in step 109. Steps 102 to 109 may provide an example implementation of the preprocessing method for obtaining the update text chunks and the closest initial text chunks; however, it is not limited to.

The output 112 that results from execution of steps 101 to 109 may be n closest initial text chunks *itxt*₁ ... *itxtₙ* and m update text chunks *utxt*₁ ... *utxtₘ*, where n>=1 and m>=1.

A set of one or more dimensions representing the update may be determined in step 110. Each dimension provides a feature categorizing a content of the update. For each dimension of the set of dimensions, a metric set may be determined in step 111. Each metric set comprises one or more metrics for evaluation of the respective dimension. The output 113 that results from execution of steps 111 to 112 may be k dimensions *dim*₁ *..*. *dimₖ* and associated metric sets *met*₁*... metₖ,* where k>=1.

A language model (LM) that may perform multiple analysis tasks may be provided in step 115. The analysis tasks are defined based on the metric sets.

For each current i-th dimension of the set of dimensions and for each j-th metric of the metric set associated with the i-th dimension a set of one or more of the analysis tasks whose results can be used to evaluate the j-th metric may be selected in step 118, at least one prompt may be generated in step 121 for the j-th metric, the at least one prompt may be input to the LM for receiving results for the selected analysis tasks and the results may be collected together with previous results in step 123.

The results obtained for the set of dimensions may be used in step 124 to evaluate the metric sets. The evaluated metric sets may be used in step 125 for comparing the update with the closest initial text chunks. A control signal may be provided in step 126 to a control unit. The control signal is indicative of commands to update the corpus database based on the comparison result. The control unit may update in step 127 the corpus database using the control signal.

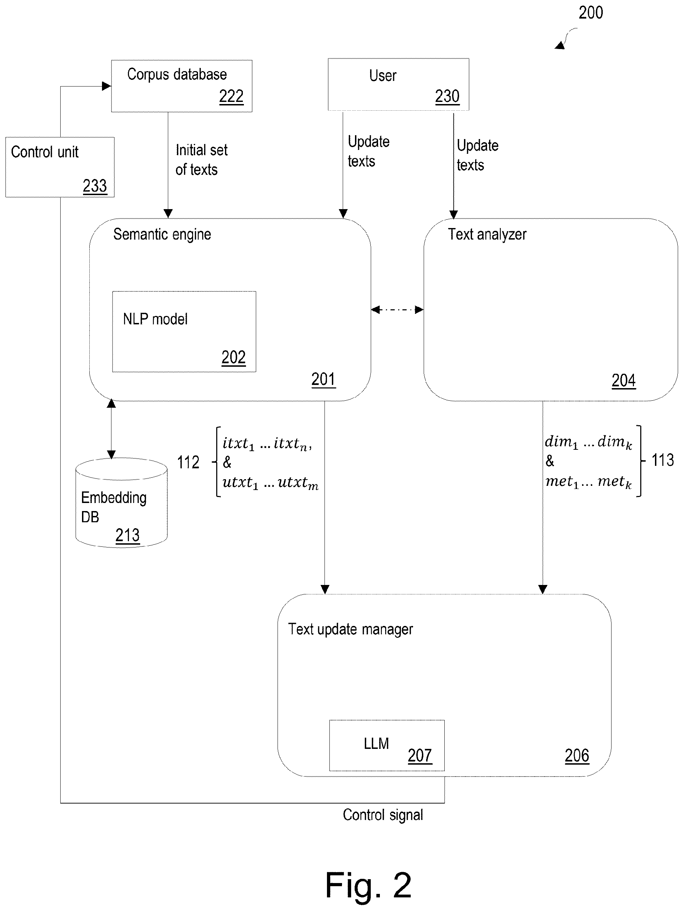

**Fig. 2** is a block diagram of an exemplary computer system for handling data requests directed to a corpus database 222. The corpus database 222 comprises an initial set of texts obtained from one or more sources. The initial set of texts represents a specific ontology.

The computer system 200 comprises a semantic engine 201, a text analyzer 204 and a text update manager 206. The semantic engine 201 comprises an NLP model 202. The semantic engine 201 is configured to perform steps 102 through 109 of Fig. 1 using the initial set of texts obtained from the corpus database 222 and update texts received from a user 230. The semantic engine 201 is configured to perform step 104 using the embedding database 213. The text analyzer 204 is configured to perform steps 110 to 111 using the update texts received from the user 230.

The text update manager 206 comprises a LLM 207. The text update manager 206 is configured to perform steps 115 to 126 using the outputs 112 and 113 of the semantic engine 201 and the text analyzer 204 and using the LLM 207. The control unit 233 may receive the control signal. The control unit 233 may update the corpus database 222 using the control signal.

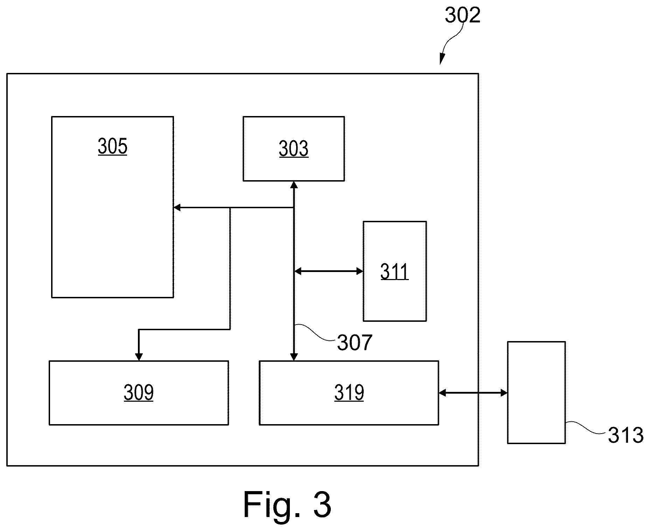

**Fig. 3** is a block diagram of an exemplary computer system for implementing at least part of the present method in accordance with an example of the present subject matter. The computer system 302 may provide an example implementation of the semantic engine 201, the text analyzer 204 and the text update manager 206.

The components of the computer system 302 may include, but are not limited to, one or more processors or processing units 303, a storage system 311, a memory unit 305, and a bus 307 that couples various system components including memory unit 305 to processor 303. The storage system 311 may include for example a hard disk drive (HDD). The memory unit 305 may include computer system readable media in the form of volatile memory, such as random access memory (RAM) and/or cache memory.

The computer system 302 may also communicate with one or more external devices such as a keyboard, a pointing device, a display 313, etc.; one or more devices that enable a user to interact with computer system 302; and/or any devices (e.g., network card, modem, etc.) that enable the computer system 302 to communicate with one or more other computing devices. Such communication can occur via I/O interface(s) 319. Still yet, the computer system 302 can communicate with one or more networks such as a local area network (LAN), a general wide area network (WAN), and/or a public network (e.g., the Internet) via a network adapter 309. As depicted, the network adapter 309 communicates with the other components of the computer system 302 via bus 307.

The memory unit 305 is configured to store applications that are executable on the processor 303. For example, the memory unit 305 may comprise an operating system as well as one or more application programs. The application programs comprise instructions that when executed enable to perform steps of the method described with reference to Fig. 1.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

While the invention has been illustrated and described in detail in the drawings and foregoing description, such illustration and description are to be considered illustrative or exemplary and not restrictive; the invention is not limited to the disclosed examples.

## Claims

1. A method for handling data requests directed to a corpus database (222), the corpus database (222) comprising an initial set of texts obtained from one or more sources, the initial set of texts representing a specific ontology, the method comprising:
preprocessing (102-109) the initial set of texts and a received update, the update comprising a new text and/or an update of an initial text, the update belonging to the specific ontology, the preprocessing resulting in update text chunks of the update and closest initial text chunks of the initial set of texts;
determining (110) a set of one or more dimensions representing the update,
each dimension providing a feature categorizing a content of the update;
for each dimension of the set of dimensions determining (111) a metric set,
each metric set comprising one or more metrics for evaluation of the respective dimension;
providing (115) a language model, LM, that can perform multiple analysis tasks, the analysis tasks being defined based on the metric sets;
for each dimension of the set of dimensions performing operations of:
for each metric of the metric set associated with the dimension, performing operations of:
selecting (118) a set of one or more of the analysis tasks whose results can be used to evaluate the metric;
generating (121) at least one prompt from the update text chunks and the closest initial text chunks in accordance with the selected set of tasks;
inputting (122) the at least one prompt to the LM for receiving results of the selected analysis tasks;
using (124) the results obtained for the set of dimensions to evaluate the metric sets;
using (125) the evaluated metric sets for comparing the update with the closest initial text chunks;
providing (126) a control signal to a control unit, the control signal being indicative of commands to update the corpus database based on the comparison result;
updating (127) by the control unit the corpus database using the control signal.

2. The method of claim 1, wherein the preprocessing comprises:
segmenting the initial set of texts into initial text chunks;
using a natural language processing, NLP, learning model to represent the initial text chunks in a latent space by an embedding vector per initial text chunk, resulting in initial embedding vectors;
storing the initial embeddings vectors in an embedding database;
segmenting the update into the update text chunks;
using the NLP learning model to represent the update text chunks in the latent space by an embedding vector per update text chunk, resulting in update embedding vectors;
performing a similarity search in the embedding database between the update embedding vectors and the initial embedding vectors, resulting in closest initial embedding vectors of the initial embedding vectors;
retrieving initial text chunks, referred to as the closest initial text chunks, that are represented by the closest initial embedding vectors;

3. The method of claim 1 or 2, wherein the generating of the prompts comprises:
for each task of the selected set of tasks and for each text chunk of the update text chunks and the closest initial text chunks: generating a prompt for the text chunk.

4. The method of claim 1 or 2, wherein the generating of the at least one prompt comprises:
generating one prompt representing the update text chunks and the closest initial text chunks; or
generating one prompt representing the update text chunks and another prompt representing the closest initial text chunks; or
generating one prompt representing the update text chunks and enhancing the prompt with a context field defined from the closest initial text chunks.

5. The method of claim 4, wherein the generating is performed per task of the selected set of tasks or for the entire selected set of tasks.

6. The method of any of the preceding claims, the inputting of the at least one prompt comprising: for each metric inputting simultaneously to the LM the at least one prompt which are generated for the metric.

7. The method of any of the preceding claims 1 to 5, the inputting of the at least one prompt comprising: for each metric set inputting simultaneously to the LM the at least one prompt which are generated for the metric set.

8. The method of any of the preceding claims 1 to 5, the inputting of the at least one prompt comprising: inputting simultaneously to the LM the at least one prompt which are generated for the entire set of dimensions.

9. The method of any of the preceding claims 1 to 5, the inputting of the at least one prompt comprising: sequentially inputting each prompt of the at least one prompt.

10. The method of any of the preceding claims, wherein the inputting the at least
one prompt to the LM for receiving results of the selected analysis tasks comprises:
connecting to a remote system where the LM is deployed;
sending the at least one prompt to the remote system, thereby triggering the inputting of the at least one prompt to the LM; and receiving results of the selected analysis tasks from the remote system.

11. The method of any of the preceding claims, further comprising annotating each text chunk of the update text chunks and the closest initial text chunks, wherein the generating of the at least one prompt is performed using the annotated text chunks.

12. The method of any of the preceding claims, wherein the comparing comprises: identifying redundancies or inconstancies between the update and the closest initial text chunks.

13. The method of any of the preceding claims, comprising performing the update of the corpus database with the update if the comparison results indicate a match between the update and the closest initial text chunks.

14. A computer system being configured for performing the method of any of the preceding claims.

15. A computer program product comprising instructions for causing a computer system for performing the method of any of the preceding claims.
